# EUROPÄISCHE PATENTANMELDUNG

(11) **EP 2 186 559 A2**
(43) Veröffentlichungstag der Anmeldung: **19.05.2010**
(21) Anmeldenummer: 09174733.7
(22) Anmeldetag: 02.11.2009
(51) Int. Cl.: B01J 19/30, B01J 19/32

(54) **Kolonnenpackung zum Wärme- oder Stoffaustausch**

(30) Priorität: 12.11.2008 EP 08168926
(71) Anmelder: BASF SE, 67056 Ludwigshafen (DE)
(72) Erfinder: Metzen, Bernd, 67593 Westhofen (DE); Bartels, Frank Wilco, 49448 Lemförde (DE); Bruchmann, Bernd, 67251 Freinsheim (DE); Mahn, Ulrike, 68165 Mannheim (DE); Löning, Jan-Martin, 67251 Freinsheim (DE); Holtmann, Thomas, 67346 Speyer (DE); Heimann, Frank, 67065 Ludwigshafen (DE)

(57) **Zusammenfassung**

Gegenstand der vorliegenden Erfindung ist ein Verfahren zur Herstellung einer mit einem Polymer belegten, metallischen Packung, wobei das für die Belegung der Packung mit dem Polymer eingesetzte Polymer in einem Lösungsmittel derart löslich ist, dass mindestens 0,01 g Polymer pro Liter Lösungsmittel gelöst werden, wobei man die Packung mit einer Lösung, welche das Polymer enthält, in Kontakt bringt sowie die Verwendung der hergestellten Packungen zum Wärme und / oder Stoffaustausch.

## Beschreibung

Die Erfindung betrifft ein Verfahren zur Herstellung von einer mit einem Polymer belegten, metallischen Packung, die mit dem Verfahren hergestellte Packung sowie die Verwendung der erfindungsgemäß hergestellten Packungen für den Wärme- und/oder Stoffaustausch zwischen einer wässrigen Flüssigkeit und einem Gas oder für die Phasentrennung zwischen einer flüssigen wässrigen Phase und einer flüssigen organischen Phase.

Bei thermischen Trennverfahren in einer Kolonne werden Stoffe und meist auch Wärme zwischen mindestens zwei Phasen unterschiedlicher Zusammensetzung eines fluiden Stoffgemisches ausgetauscht. Hierbei handelt es sich häufig um eine gasförmige und eine flüssige Phase oder um zwei unterschiedliche flüssige Phasen, meist mit relativ großer Dichtedifferenz. Dieser Stoff- und Wärmetransport wird durch in die Kolonne eingebaute Elemente wie Böden, Füllkörper oder Packungen, die für eine ausreichende Berührungszeit der Phasen und eine hinreichend große Phasengrenzfläche sorgen, intensiviert.

Bei Destillationen, Absorptionen, Gaswäschen und ähnlichen verfahrenstechnischen Operationen werden Kolonnen eingesetzt, die Einbauten für den Wärme- und Stoffaustausch zwischen Gas und Flüssigkeit enthalten. Diese Einbauten bestehen entweder aus Querstromböden (beispielsweise Ventil-, Sieb-, Tunnel- oder Glockenböden), aus Dual-Flow-Böden, aus ungeordneten Packungen (d.h. regellose Schüttungen aus Füllkörpern, z.B. Pallringe oder Sattelkörper) oder aus geordneten Packungen in verschiedenen geometrischen Ausführungen (z.B. Metallblechpackungen oder Metallgewebepackungen). Diese Einbauten sollen einen möglichst intensiven Stoffübergang zwischen Gas und Flüssigkeit bewirken. Dieser intensive Stoffübergang erfordert eine möglichst große Phasengrenzfläche. Eine Beschreibung solcher Kolonnen ist im Lehrbuch "Thermische Trennverfahren" von K. Sattler 3. Auflage 2001, WILEY-VCH Verlag GmbH, Weinheim (FRG) auf den Seiten 208 - 274 zu finden.

Für die Destillation von wässrigen Medien werden bevorzugt Querstromböden eingesetzt. Dies wird dadurch begründet, dass die hohe Oberflächenspannung von Wasser bei Verwendung von Packungen einen geringeren Anteil an benetzter Oberfläche zur Gesamtoberfläche der Packungen gegenüber organischen Medien mit geringer Oberflächenspannung zur Folge hat. Diese Reduzierung der möglichen Phasengrenzfläche bewirkt eine Reduzierung der Effizienz von Packungen hinsichtlich des Stoffübergangs. Grundlagen hierzu sind dem Lehrbuch "Thermische Trennverfahren" von K. Sattler 3. Auflage 2001, WILEY-VCH Verlag GmbH, Weinheim (FRG) S. 342 - 365, insbesondere S. 353 zu entnehmen.

Jedoch hat der Einsatz von Querstromböden den Nachteil, dass diese gegenüber Packungen einen höheren Druckverlust und eine geringere Kapazität haben. Dies führt meist zu höheren Sumpftemperaturen und zu größeren Kolonnendurchmessern. Der Einsatz von Böden bei thermisch instabilen Stoffen ist teilweise unmöglich.

Es stellte sich somit die Aufgabe, verbesserte Packungen zu finden, welche in verfahrenstechnisch einfacher und effektiver Art und Weise einen Stoffaustausch und/oder Wärmeaustausch in einer Kolonne, welche solche Packungen enthält und der ein wässriger Stoffstrom zugeführt wird, ermöglichen. Hierbei soll ferner im Vergleich mit bisher üblicherweise eingesetzten Packungen im Falle der Aufreinigung wässriger Systeme in einer Kolonne eine höhere Abreicherung erzielt werden. Weiterhin soll ein Verfahren zur Herstellung solcher Packungen sowie ein verbessertes Verfahren zur Abtrennung von flüchtigen organischen Stoffen aus wässrigen Lösungen durch Abtrennung in einer Packungen enthaltenden Kolonne bereitgestellt werden.

Demgemäß wurde ein Verfahren zur Herstellung einer mit einem Polymer belegten, metallischen Packung gefunden, wobei das für die Belegung der Packung mit dem Polymer eingesetzte Polymer in einem Lösungsmittel derart löslich ist, dass mindestens 0,01 g Polymer pro Liter Lösungsmittel gelöst werden, wobei man die Packung mit einer Lösung, welche das Polymer enthält, in Kontakt bringt.

Für das erfindungsgemäße Verfahren können handelsübliche, metallische Packungen eingesetzt werden. Typischerweise wird hier als Metall ein allgemein gebräuchlicher Edelstahl wie beispielsweise ein Edelstahl mit der Werkstoffnummer 1.4539 verwendet, es können aber auch Titan, Tantal oder Zirkonium als Metalle eingesetzt werden.

Als Polymer eignen sich für das erfindungsgemäße Verfahren solche, welche bei Raumtemperatur (20°C) und Normaldruck (1013mbar) mit mindestens 0,01 g Polymer pro Liter Lösungsmittel löslich sind. Unter Polymer sind hierbei organische Verbindungen zu verstehen, welche ein gewichtsmittleres Molekulargewicht von mehr als 2000 g/mol, bevorzugt mehr als 5000g/mol, besonders bevorzugt mehr als 10000 g/mol aufweisen. Es können sich auch Polymere mit einem gewichtsmittleren Molekulargewicht von mehr als 500000g/mol besonders empfehlen.

Die erfindungsgemäße Belegung der Oberfläche der Packungen erfolgt bevorzugt durch in Kontakt bringen mit der Lösung des Polymeren, bevorzugt durch Tauchen der Packungen in eine Lösung des Polymers, welches für die Belegung ausgewählt wurde. Hierbei wird bevorzugt eine Polymerlösung eingesetzt, welche 0,1 bis 10 Gew.-%, bevorzugt 0,5 bis 2 Gew.-%, besonders bevorzugt 1 Gew.-% an Polymer enthält. Alternativ kann sich auch das Fluten einer kompletten Kolonne, welche die zu belegenden Packungen enthält, mit der Polymerlösung als besonders effektives Verfahren besonders empfehlen. Auch in diesem Fall wird bevorzugt eine Polymerlösung eingesetzt, welche 0,1 bis 10 Gew.-%, bevorzugt 0,5 bis 2 Gew.-%, besonders bevorzugt 1 Gew.-% an Polymer enthält. Die Kontaktzeit der zu belegenden Packungen mit der Polymerlösung sollte dabei bevorzugt in einem Bereich von 0,1 Minuten bis 4 Stunden liegen. In der Regel empfiehlt es sich eine Kontaktzeit zu wählen, welche mindestens 0,5 Minuten bis zwei Stunden, besonders bevorzugt 1 Minute bis 60 Minuten beträgt. Als Lösungsmittel bietet sich neben Wasser auch der Stoff an, der mit Hilfe der belegten Packung von Wasser getrennt werden soll oder auch die aufzutrennende wässrige Lösung selbst. Prinzipiell kann jedes Lösungsmittel verwendet werden, das mit dem Polymer keine Bindung eingeht.

In einer bevorzugten Ausführungsform werden ionische Polymere für das erfindungsgemäße Verfahren eingesetzt. Hierunter sind Polymere zu verstehen welche pro Molekül mindestens eine, bevorzugt mindestens drei, besonders bevorzugt mindestens fünf funktionelle Gruppen aufweisen, welche die in wässriger Lösung je nach pH-Wert eine positive oder negative Ladung übernehmen können. Solche funktionellen Gruppen sind beispielsweise primäre, sekundäre oder tertiäre Aminogruppen, Carbonsäuregruppen, Sulfatgruppen, Sulfon-, Sulfen- oder Sulfinsäuregruppen, Phosphatgruppen, Phosphorsäure-, Phosphorigsäure - oder Hypophosphorigsäuregruppen. Funktionelle Gruppen können hierbei in das Polymer eingebaute Gruppen sein, welche ein oder mehrere Atome aufweisen, die von Kohlenstoff und Wasserstoff verschieden sind.

Geeignete Polymere mit Aminogruppen umfassen vor allem Polyvinylamine, Polyvinylamidoamine, Polyethylenimine, Polypropylenimine, Polyamidoamine, Polyetheramine oder Polyharnstoffamine.

Sie weisen bevorzugt ein gewichtsmittleres Molgewicht (M_{w}) von 200 bis 3 000 000, bevorzugt von 200 bis 2 000 000 g/mol auf. Im Allgemeinen beträgt der Gehalt an Aminogruppen, berechnet als N, 3 bis 35 mol pro kg, bevorzugt 4 bis 25 mol pro kg, besonders bevorzugt 5-24 mol pro kg.

Die Struktur der Polymere kann so gewählt werden, dass es sich um lineare, verzweigte oder hyperverzweigte Polymere, Sternpolymere, Kammpolymere, Dendrimere oder die Kombination aus hyperverzweigten Polymeren oder Dendrimeren und linearen Polymeren, den sogenannten "Dendronisierten Polymeren" oder "Dendronized Polymers" handelt. Zu "Dendronized Polymers" siehe zum Beispiel A. D. Schlüter et al., Chem. Eur. J. 2003, 9, 6083 und darin zitierte Literatur.

Bei den Polyethyleniminen und Polypropyleniminen sind besonders lineare, verzweigte oder hyperverzweigte Polymere bevorzugt. Hierzu zählen insbesondere Homopolymere mit 4, 5, 6, 10, 20, 35 und 100 Wiederholungseinheiten.

Bevorzugte Polyethylenimine sind solche der allgemeinen Formel (I) 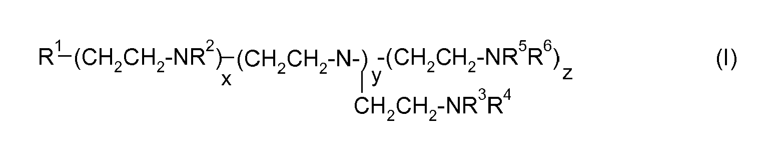 mit einer mittleren Molmasse (Mw) von 200 bis 2.000.000 g/mol, in der die Reste R¹ bis R⁶ unabhängig voneinander Wasserstoff, lineare oder verzweigte C₁- bis C₂₀-Alkyl-, -Alkoxy-, -Polyoxyethylen-, -Hydroxyalkyl-, -(Alkyl)carboxy-, -Phosphonoalkyl-, -Alkylaminoreste, C₂- bis C₂₀-Alkenylreste oder C₆- bis C₂₀-Aryl-, -Aryloxy-, -Hydroxyaryl-, - Arylcarboxy-, oder -Arylaminoreste, die gegebenenfalls weiter substituiert sind, und R⁴ und R⁵ darüber hinaus noch weitere Polyethylenimin-Polymerketten bedeuten und x, y und z unabhängig voneinander jeweils 0 oder eine ganze Zahl bezeichnen. R¹ kann darüber hinaus auch eine primäre Aminogruppe bedeuten.

Die Summe aus x, y und z ist so zu wählen, dass die mittlere Molmasse im angegebenen Bereich liegt. Bevorzugte Bereiche für die mittlere Molmasse (Mw) der Polyethylenimine der allgemeinen Formel I sind 250 bis 500.000 g/mol, insbesondere 300 bis 100.000 g/mol.

Bevorzugte Reste R¹ bis R⁶ sind Wasserstoff, Methyl, Ethyl, Carboxymethyl, Carboxyethyl, Phosphonomethyl, 2-Hydroxyethyl, 2-(2'-Hydroxyethoxy)ethyl und 2-[2'-(2"-Hydroxyethoxy)-ethoxy]ethyl und für R¹ eine primäre Aminogruppe. Handelsübliche Polyethylenimine werden z.B. unter den Handelsnamen Lupasol® und Polymin® von der BASF SE vertrieben.
Zu linearen und verzweigten Polyethyleniminen siehe auch Römpp, Chemisches Lexikon, Online-Version 2004, Georg Thieme-Verlag und darin angegebene weiterführende Literatur.

Bei den Polyvinylaminen und Polyvinylamidoaminen sind besonders lineare Polyvinylamine bevorzugt. Polyvinylamine sind allgemein bekannt und z.B. in der EP-A-71050 beschrieben. Handelsübliche lineare Polyvinylamine werden z.B. unter den Handelsnamen Lupamin® oder Catiofast® von der BASF SE vertrieben.

Bevorzugte Polyvinylamine und Polyvinylamidoamine sind Polyallylamin, Poly(diallyldimethylammonium-chlorid), Polyvinylformamid, Polyvinylpyrrolidon, Polyvinylacetamid, Polyvinylmethylformamid, Polyvinylmethylacetamid, Poly(dimethylaminopropylmethacrylamid), Poly(dimethylaminoethylacrylat), Poly(diethylaminoethylacrylat), Poly-(acryloylethyltrimethylammoniumchlorid) , Poly(acrylamidopropyltrimethylammoniumchlorid), Poly(methacrylamidopropyltrimethylammoniumchlorid), Polyacrylamid, Poly-(vinylpyridin), Hexadimethrin Bromid, Poly(dimethylamin-co-epichlorhydrin), Poly(dimethylamin-co-epichlorhydrin-co-ethylendiamin), Poly(amidoamin-epichlorhydrin) oder Copolymere, die N-Vinylformamid, Allylamin, Diallyldimethylammoniumchlorid, N-Vinylacetamid, N-Vinylpyrrolidon, N-Methyl-N-vinylformamid, N-Methyl-N-vinylacetamid, Dimethylaminopropylmethacrylamid, Dimethylaminoethylacrylat, Diethylaminoethylacrylat, Acryloylethyltrimethylammoniumchlorid oder Methacrylamidopropyltrimethylammoniumchlorid in einpolymerisierter Form und gegebenenfalls in gespaltener Form enthalten. Weiterhin können die genannten Polymere in kationischer oder auch anionischer Form, sowie deren Salze verwendet werden. Bevorzugt sind dabei nichtionische oder kationische Polyvinylformamide, Polyvinylamin, Polyacrylamid und Poly(diallyldimethylammoniumchlorid). Besonders bevorzugt sind kationische Polyvinylformamide oder Polyvinylamin.

Besonders bevorzugt ist ein Polyvinylamin der allgemeinen Formel (II) 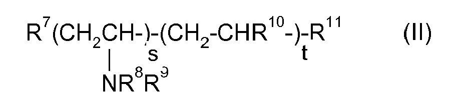 mit einer mittleren Molmasse (Mw) von 200 bis 2.000.000 g/mol, in der die Reste R⁷ bis R¹¹ unabhängig voneinander Wasserstoff, lineare oder verzweigte C₁- bis C₂₀-Alkyl-, -Alkoxy-, -Polyoxyethylen-, -Hydroxyalkyl-, -(Alkyl)carboxy-, -Phosphonoalkyl-, -Alkylaminoreste, C₂- bis C₂₀-Alkenylreste oder C₆- bis C₂₀-Aryl-, -Aryloxy-, -Hydroxyaryl-, -Arylcarboxy-, oder-Arylaminoreste, die gegebenenfalls weiter substituiert sind, und darüber hinaus noch einen Formamidyl-, Pyrrolidonyl- oder Imidazolylrest bedeuten, s eine ganze Zahl bezeichnet und t für 0 oder eine ganze Zahl steht, wobei das genannte Polyvinylamin auch an in den Verbindungen (II) vorhandenen tertiären und/oder noch vorhandenen freien primären und/oder sekundären N-Atomen quaterniert sein kann.

Die Summe aus s und t ist so zu wählen, dass die mittlere Molmasse im angegebenen Bereich liegt. Bevorzugte Bereiche für die mittlere Molmasse (Mw) der Polyvinylamine (V) sind 500 bis 1.500.000 g/mol, insbesondere 800 bis 1.000.000 g/mol.

Bevorzugte Bedeutungen für die Reste R⁷ bis R¹¹ sind ebenfalls diejenigen, welche oben für R¹ bis R⁶ in der allgemeinen Formel I angegeben sind.

Als weitere, für das erfindungsgemäße Verfahren geeignete Polymere finden lineare Polyamidoamine wie auch verzweigte oder hyperverzweigte Polyamidoamine, wie zum Beispiel beschrieben in US 4435548, EP 115 771, EP 234 408, EP 802 215, in L. J. Hobson und W. J. Feast, Polymer 1999, 40, 1279 - 1297 oder in H.-B. Mekelburger, W. Jaworek und F. Vögtle, Angew. Chemie 1992, 104, No. 12, 1609 - 1614, Verwendung.

Bevorzugte Polyamidoamine weisen bevorzugt eine mittlere Molmasse (Mw) von 500 bis 1.000.000 g/mol auf. Sie sind z.B. durch Umsetzung von C₄- bis C₁₀-Dicarbonsäuren oder-Tricarbonsäuren mit Poly(C₂- bis C₄-alkylen)polyaminen mit 2 bis 20 basischen Stickstoffatomen im Molekül erhältlich, die eine geeignete Zahl an primären und/oder sekundären Aminogruppen aufweisen, die zur Ausbildung von Amid- bzw. Esterbindungen mit der Carbonsäure befähigt sind.

Besonders bevorzugte Bereiche für die mittlere Molmasse (Mw) der Polyamidoamine sind 800 bis 800.000 g/mol, insbesondere 1000 bis 500.000 g/mol.

Als weitere, geeignete Polymerklasse finden Aminogruppen enthaltende Polyharnstoffamine Verwendung. Bevorzugt werden verzweigte oder hyperverzweigte Aminogruppen enthaltende Polyharnstoffamine, wie zum Beispiel beschrieben in den EP 1 474 461, WO 2005/075541 und WO 2005/044897 sowie in EP 1 273 633, US 2002/0161113 oder US 2003/0069370 verwendet.

Dendrimere oder dendrimerartige Amine oder deren Vorstufen sind zum Beispiel N,N,N',N'-Tetraaminopropylalkylendiamin, wobei als Alkyleneinheit bevorzugt die Ethylen- oder Butylen-Einheit gewählt ist, wobei diese Amine üblicherweise als N6-Amine, gemessen an der Anzahl der Stickstoffatome, bezeichnet werden, sowie die daraus durch Aminopropylierung herstellbaren dendrimeren Amine, wie N14-, N30-, N62- und N128-Amin. Diese Amine weisen ein Ethylendiamin-oder Butylendiamin-Grundgerüst auf, dessen Wasserstoffatome am Stickstoff durch Amino(n-propyl)reste substituiert sind. Die dabei endständigen Aminogruppen können wiederum durch entsprechende Aminopropylgruppen substituiert sein (N14-Amin), usw.. Herstellungsverfahren für diese Amine sind beschrieben in WO 96/15097, ausgehend von Ethylendiamin. Ebenfalls bevorzugte Beispiele dieser Amine sind entsprechende N-Amine, wie sie in WO 93/14147 beschrieben sind, die ausgehend von Butylendiamin statt wie vorstehend Ethylendiamin hergestellt sind.

Weitere Dendrimere oder dendrimerartige Amine können zum Beispiel aufgebaut sein auf Basis von Polyamid-Chemie, wie zum Beispiel beschrieben in US 4568737 oder US 5338532.

Eine weitere Klasse von Stickstoff-Atomen enthaltenden Polymeren sind Aminogruppen enthaltende Sternpolymere, wie beschrieben zum Beispiel in der WO 96/35739 oder dendronisierte Polyethylenimine, wie zum Beispiel beschrieben in der WO 2008/037612.

Weiterhin als Polymer für die erfindungsgemäße Belegung von Packungen geeignet sind Polymere, wie sie z.B. bei der radikalischen Polymerisation von Acrylsäure oder Methacrylsäure (im weiteren als (Meth)acrylsäuren bezeichnet) oder deren Derivaten, oder der Copolymerisation von Malein- oder Fumarsäure oder deren Derivaten mit anderen Vinylmonomeren anfallen. Die stark exotherm verlaufende Polymerisation der (Meth)acrylsäure-Monomeren wird bevorzugt in wässriger Lösung (Lösungspolymerisation) bei (Meth)acrylsäure-Konzentrationen von maximal ca. 30%, insbesondere radikalisch mit Kaliumperoxodisulfat durchgeführt. Sie kann aber auch als Fällungspolymerisation, z.B. in Benzol, oder als Emulsions-polymerisation erfolgen. Poly(meth)acrylsäuren sind auch durch Hydrolyse von polymeren (Meth)acrylsäure-Derivaten (Estern, Amiden, Nitrilen) zugänglich.

Die Eigenschaften der Poly(meth)acrylsäuren sind durch Copolymerisation von (Meth)acrylsäure mit sehr unterschiedlichen Comonomeren breit variierbar. Poly-(meth)acrylsäuren sind wasserlöslich, insbesondere in Form ihrer Salze. Technische Produkte weisen Molmassen im Bereich von ca. 2000 bis 3.000.000 g/mol auf.

Polymerisate aus Acrylsäure, sogenannte Polyacrylsäuren, gehören zu den Polycarbonsäuren. Sie werden als Festkörper, als wäßrige Lösungen oder als Emulsionen angeboten, und zwar sowohl in der Säure- als auch in der Salzform, vorzugsweise als Natrium- oder Ammoniumsalze.

Salze der Polyacrylsäuren dienen wegen der hohen Viskosität ihrer wässrigen Lösungen als Schlichten oder Verdicker für Latices und Kosmetika, als Bohrspülhilfsmittel bei der Erdölgewinnung sowie als Flockungsmittel.
Für die erfindungsgemäße Anwendung zur Belegung von Packungen eignen sich insbesondere auch Copolymere der Acrylsäure, zum Beispiel mit hydroxyfunktionellen Acrylsäureestern oder mit Acrylamid.

Siehe dazu auch "Polyacrylates " und "Polyacrylamides and Poly(Acrylic Acids)" in Ullmann's Encyclopedia of Industrial Chemistry - Online Version, John Wiley and Sons, 2008.
Weiterhin geeignet sind Copolymere mit nicht acrylischen Doppelbindungen enthaltenden Monomeren, wie beispielsweise Ethylen, Propylen, Buten, Isobuten, Styrol oder Methylstyrol, sofern sie noch Säure- oder Salzgruppen aufweisen.
Weiterhin geeignet sind Homo- u. Copolymere der Vinylphosphonsäure mit Gruppierungen des Typs 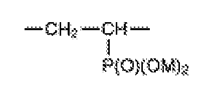 wobei M = H, Li, Na, K, Cs, Ca oder Mg darstellt. Polymere Vinylphosphonsäuren sind in der Regel als Metallsalze wasserlöslich. Das Homopolymer, Polyvinylphosphonsäure, wird zum Beispiel als Primer für Metalle zur Erhöhung der Korrosionsbeständigkeit, zur Verbesserung der Haftfestigkeit von Beschichtungsmassen, zur Behandlung von Aluminium-Platten in der Photolithographie oder als Produkt mit Antikarieseffekt in Dentalmassen eingesetzt.

Weiterhin sind zum Beispiel sulfonierte Polystyrole geeignet.

Die erfindungsgemäße Belegung der Packungen erfolgt durch in Kontakt bringen des in verdünnter Lösung vorliegenden Polymeren mit dem Packungsmaterial. Dabei lagern sich Polymermoleküle an der Metalloberfläche der Packung an, ohne dass hier eine Zwangsapplikation wie bei einer Beschichtung erforderlich wäre. In Abhängigkeit von dem ausgewählten Polymer bewirken bei dieser durch Selbstorganisation des Polymeren entstehenden Belegung van der Waals-Kräfte und/oder ionische Kräfte das Anhaften des Polymers an der Metalloberfläche.

Durch die Belegung der Packungen mit den Polymeren wird die Oberfläche der Packungen mit einer dünnen Schicht des Polymers überzogen. Die Schichtdicke beträgt dabei bevorzugt 0,3 Nanometer bis 1 Mikrometer, besonders bevorzugt 0,5 Nanometer bis 800 Nanometer, besonders bevorzugt 1 Nanometer bis 500 Nanometer und speziell 2 Nanometer bis 400 Nanometer. Bevorzugt erfolgt eine lückenlose Belegung der Oberfläche mit einer Polymerlage (monomolekulare Belegung) oder mit bis zu 10 Lagen von Polymermolekülen. Überraschenderweise ist diese Belegung der Packungsoberfläche über mehrere Monate stabil, auch bei thermischer Belastung, zum Beispiel bei 50, 80, 100 oder 120°C und auch bei der Verwendung solcher erfindungsgemäß belegter Packungen zur Abtrennung von flüchtigen organischen Stoffen aus wässrigen Lösungen mittels einer Kolonne, welche solcherlei Packungen enthält.

Es war überraschend, dass Metallpackungen durch das erfindungsgemäße Verfahren in der geschilderten Weise mit dem Polymer belegt werden. Weiterhin konnte es vom Fachmann nicht vorhergesehen werden, dass eine derartige Belegung in einem solchen Maße die Oberfläche der Metallpackungen hydrophiliert und diese vorteilhafte Eigenschaft darüber hinaus auch über eine Standzeit von mehreren Monaten erhalten bleiben kann.

Die Messung der durch die Belegung ausgebildeten Schichtdicke kann beispielsweise durch Rasterkraftmikroskopie (scanning force microscopy, SFM oder AFM) erfolgen, sofern es sich um nicht zu raue Substratstellen und Schichtdicken von einigen Nanometern und mehr handelt; ultradünne Schichten können mit Hilfe von oberflächensensitiver Elementanalyse (etwa TOF-SIMS oder ESCA) in Verbindung mit präparativen Schritten (schichtweiser Abtrag der Belegung durch lonenstrahlerosion) detektiert werden. Mit zunehmender Dauer der Kontaktzeit von Packungsoberfläche und Polymerlösung kann die Schichtdicke für manche Systeme vergrößert werden. Für die Ausbildung eines Kontakts zwischen Packung und Polymerlösung ist es wesentlich, dass ein inniger Kontakt zwischen den beiden Komponenten gegeben ist. In bevorzugten Ausführungsformen kann dies z.B. durch Tauchen von Packungen in die Polymerlösung oder durch Fluten einer Kolonne, welche die zu belegenden Packungselemente enthält, mit der Polymerlösung erfolgen.

Nach der erfindungsgemäßen Belegung der Packung mit dem Polymer kann diese unmittelbar für ihren Verwendungszweck eingesetzt werden. Je nach Anforderungsprofil kann es sich empfehlen, die Packung vor ihrem Einsatz noch kurz beispielsweise durch Spülen von Resten der Polymerlösung zu befreien.

Das erfindungsgemäße Verfahren zur Belegung von Metallpackungen unterscheidet sich deutlich von allgemein bekannten Beschichtungsverfahren. Bei Beschichtungsverfahren erfolgt eine Zwangsapplikation des für die Beschichtung vorgesehenen Polymers durch Maßnahmen wie Sprühen oder Spachteln, der anschließend eine Vernetzung, beispielsweise durch UV-Bestrahlung oder chemische Reaktion, folgt, wodurch das Molekulargewicht der Beschichtung aufgebaut wird. Die bei einem Beschichtungsverfahren gebildeten Schichten sind darüber hinaus üblicherweise deutlich dicker als bei dem erfindungsgemäßen Verfahren.

Bevorzugt werden für das erfindungsgemäße Verfahren solche Polymere eingesetzt, welche sich in einem Lösungsmittel mit mindestens 0,1g Polymer pro Liter Lösungsmittel lösen. Bevorzugt wird als Lösungsmittel Wasser eingesetzt. Es können aber auch das aufzutrennende wässrige Gemisch oder die abzutrennenden organischen Komponenten als Lösungsmittel verwendet werden.

Durch die erfindungsgemäß für die Belegung der Oberfläche der Packungen eingesetzten Polymere wird durch Hydrophilierung die Oberfläche der Packungen in ihrer Benetzbarkeit für eine wässrige Lösung derart verbessert, dass der Stoffaustausch zwischen Flüssigkeit und Dampf bei der Destillation von solchen wässrigen Lösungen mit hoher Oberflächenspannung maximiert wird. Dies gilt auch für den Wärmeaustausch. Durch die Hydrophilierung verändert sich der Kontaktwinkel zwischen der Flüssigkeit und der belegten Metalloberfläche von ursprünglich 50 - 70° auf einen Winkel kleiner 30°. Durch diese Veränderung des Kontaktwinkels wird die Benetzung der Metalloberfläche deutlich verbessert und dieser überraschend positive Effekt kann bei Anwendung des erfindungsgemäßen Verfahrens über mehrere Monate beibehalten werden. Eine zur Destillation mit hydrophilierten Packungen geeignete wässrige Lösung hat auf dem eingesetzten Metall einen Kontaktwinkel der größer als 30° ist. Als Kontaktwinkel wird der Winkel bezeichnet, den ein Flüssigkeitstropfen auf der Oberfläche eines Metalls zu dieser Oberfläche bildet. Bei Wasser bezeichnet man das Verhalten bei kleinen Kontaktwinkeln als hydrophil und bei großen Kontaktwinkeln als hydrophob.

Den Einsatz der Polymeren für das erfindungsgemäße Verfahren hätte der Fachmann nicht in Erwägung gezogen. Die Polymere wurden bisher zum Beispiel zur Herstellung von Superabsorbern, von Betonfliessmitteln oder von Lacken und Klebstoffen sowie Waschmitteln eingesetzt. Für die erfindungsgemäße Belegung von Packungen hätte man sie nicht in Erwägung gezogen, da die erfindungsgemäß eingesetzten Polymere in ihren Anwendungen in der Regel immer zusammen mit weiteren Monomeren und Polymeren zur Reaktion gebracht werden, um den bestimmungsgemäßen Zweck zu erfüllen. Es war nicht vorherzusehen, dass eine Abweichung von den Verfahrensschritten Zwangsapplikation und spätere Vernetzung zum Erfolg führen würde.

Unter ungeordneten Packungen sind im Rahmen des erfindungsgemäßen Verfahrens regellose Schüttungen aus Füllkörpern wie z.B. Pallringen oder Sattelkörpern zu verstehen. Zur Herstellung der erfindungsgemäß belegten Packungen können hierbei praktisch sämtliche, handelsüblichen ungeordneten Packungen aus Edelstahl eingesetzt werden. Ungeordnete Packungen sind beispielsweise im Buch "Distillation Design" von Henry Z. Kister, Auflage 1992, McGraw-Hill Verlag, USA auf den Seiten 423 - 441 ausführlich beschrieben.

Unter geordneten Packungen sind hierbei verschiedenste geometrische Ausführungen von Packungen wie z.B. Metallblechpackungen oder Metallgewebepackungen zu verstehen. Zur Herstellung der erfindungsgemäß belegten Packungen können hierbei praktisch sämtliche, handelsüblichen geordneten Packungen aus Edelstahl eingesetzt werden. Geordnete Packungen sind beispielsweise im Buch "Distillation Design" von Henry Z. Kister, Auflage 1992, McGraw-Hill Verlag, USA auf den Seiten 441 - 452 ausführlich beschrieben.

Wie bereits vorstehend geschildert wird bei den erfindungsgemäß hergestellten Packungen (ungeordnet oder geordnet) durch die Belegung die Oberfläche hydrophiliert, d.h. die Fähigkeit der Oberfläche der Packung zur Benetzbarkeit in Anwesenheit eines wässrigen Mediums wird gesteigert. Hierdurch wird die zur Verfügung stehende Phasengrenzfläche erhöht, was zu einer Verbesserung des Stoffaustausch bzw. Wärmeaustauschs z.B. im Innern einer Kolonne, welche solche Packungen enthält, führt. Bei einem solchen wässrigen Medium, welches einer die erfindungsgemäßen Packung enthaltenden Kolonne zugeführt wird, handelt es sich bevorzugt um eine wässrige Flüssigkeit, welche in der Kolonne einem Wärmetausch und/oder Stoffaustausch unterzogen werden soll.

Der Wassergehalt des wässrigen Mediums liegt hierbei bevorzugt bei etwa 10 bis 99,9 Gew.-%, bevorzugt 75. bis 100 Gew.-%. Restliche Bestandteile in diesem Medium sind organische Verbindungen, die sowohl schwerer- als auch leichtersiedend als Wasser sein können. Bevorzugt setzt man in Verbindung mit den erfindungsgemäßen Packungen wässrige Systeme ein, die Alkohole oder Diole enthalten, beispielsweise Methanol, Propanol, Butanol, Propandiol, Butandiol, Ethylenglykol.

Das Einsatzgebiet einer mit Polymer hydrophilierten Packung erstreckt sich für wässrige Lösungen über einen Konzentrationsbereich von 10 bis 99,9 Gew.-% Wasser, bevorzugt 75 bis 99,9 Gew.-% Wasser.

Weiterhin ist Gegenstand dieser Erfindung ein Verfahren zur Abtrennung von organischen Stoffen aus wässrigen Lösungen durch Abtrennung in einer Kolonne, bei welchem man in der Kolonne die erfindungsgemäß belegten Packungen einsetzt. Hierdurch kann vorteilhafterweise im Vergleich zu üblichen Packungen im Falle der Zugabe wässriger Stoffströme in die Kolonne eine höhere Trennleistung erzielt werden. Unter Trennleistung versteht man hierbei die Abreicherung der organischen Komponente aus der wässrigen Lösung. Dabei kann hier mittels des erfindungsgemäßen Verfahrens die Endkonzentration der organischen Komponente um den Faktor 5 bis 20 im Vergleich zum Einsatz üblicher Packungen in einer Kolonne reduziert werden. Die flüssigkeitsseitigen Belastungen liegen bei dem erfindungsgemäßen Verfahren bevorzugt in einem Bereich von 0,1 bis 30 m3/m2/h, bevorzugt 0,1 bis 5m3/m2/h. Unter organischen Stoffen versteht man in diesem Zusammenhang Komponenten, die sowohl leichtersiedend als auch schwerersiedend als Wasser sein können.

Die Verwendung der erfindungsgemäßen Packung in einer Kolonne zur Aufarbeitung wässriger Systeme bietet zahlreiche Vorteile: die verbesserte Trennleistung der Packungen führt zu kürzeren Kolonnen, weiterhin kann im Vergleich zu Bodenkolonnen vorteilhafterweise ein geringerer Kolonnendurchmesser aufgrund des Kapazitätsvorteils der Packungen realisiert werden. Somit ergibt sich ein geringerer Kolonnenholdup, was insbesondere bei der Destillation sicherheitskritischer Stoffe von Vorteil ist.
Im Falle eines Revamp bestehender Bodenkolonnen kann bei Realisierung des erfindungsgemäßen Verfahrens zur Abtrennung beim Fluten der Kolonne auch der Mantel der Kolonne mit beschichtet werden, wodurch die Effektivität weiter erhöht wird.
Wegen der verbesserten Trennleistung können geringere Sumpftemperaturen bei der Destillation im Vakuum realisiert werden.
Bei der Destillation thermisch instabiler Stoffe ergeben sich geringere Produktverluste.

Die Auswahl des jeweils konkret für das erfindungsgemäße Verfahren eingesetzten Polymers wird stark von der jeweiligen, konkreten Aufgabenstellung für die Verwendung der Packung beeinflusst. So kann es sinnvoll sein, in Gegenwart von Sauerstoff Polymere mit oxidationsstabilen funktionellen Gruppen zur Belegung auszuwählen. Solche Polymere weisen zum Beispiel tertiäre Aminogruppen, Carbonsäuregruppen, Sulfatgruppen, Sulfonsäuregruppen, Phosphatgruppen oder Phosphorsäuregruppen auf.

Als besonders gut geeignete Polymere haben sich Polyacrylsäuren oder Copolymere aus Acrylsäure mit Vinylmonomeren, Polyvinylphosphonsäuren oder Copolymere aus Vinylphosphonsäure mit Vinylmonomeren, Polyethylenimine, Polyvinylamine, Polyetheramine und Polystyrolsulfonsäuren erwiesen.

Selbstverständlich können auch Gemische der genannten Polymere eingesetzt werden, wobei darauf zu achten ist, dass die Polymergemische in dem Lösemittel oder in Wasser gelöst bleiben.

In einer weiteren bevorzugten Verwendung können die erfindungsgemäß belegten Packungen bei der Durchführung einer Phasentrennung zwischen einer flüssigen wässrigen und einer flüssigen organischen Phase eingesetzt werden. Diese kann bevorzugt in einem Dekanter durchgeführt werden, welcher erfindungsgemäß belegte Packungen enthält. Phasenzerfall einer flüssigen Phase kann dann auftreten, wenn eine oder mehrere Komponenten in einer wässrigen Lösung eine begrenzte Mischbarkeit (Mischungslücke) mit Wasser aufweisen. Dabei bezeichnet man nach dem Phasenzerfall die wasserreiche Phase als wässrige Phase und die wasserarme Phase als organische Phase.

In einer weiteren bevorzugten Verwendung der erfindungsgemäß belegten Packungen können diese in Prozessen eingesetzt werden, bei welchen verstärkt Foulingprobleme auftreten. Die erfindungsgemäß belegten Packungen verhindern das Entstehen von Fouling auf der Packungsoberfläche und damit eine Reduzierung der Trennleistung und Kapazität bzw. verzögern die Entstehung des Foulings was zu längeren Standzeiten und damit zu geringeren Wartungskosten führt.

In einer weiteren bevorzugten Ausgestaltung der Erfindung können auch metallische Oberflächen von Wärmeübertragern mit Polymeren belegt werden, wodurch Fouling durch Kristallisation und/oder Algenwachstum verhindert bzw. reduziert werden kann. Dies führt zu kleineren Apparaten bzw. zu längeren Standzeiten dieser erfindungsgemäß belegten Apparate. Hierbei können Oberflächen allgemein bekannter Wärmeübertrager erfindungsgemäß belegt werden, bevorzugt Rohrbündel- und Plattenwärmetauscher. Hinsichtlich der besonders empfohlenen Parameter bei der Herstellung der Belegung wie Kontaktzeit der zu belegenden Oberfläche mit der das Polymer enthaltenden Lösung, Schichtdicke, Konzentrationen der Lösung und besonders geeignete Polymere wird auf die vorstehenden Ausführungen zu der metallischen Packung Bezug genommen.

### Beispiele

Es wurden Versuche in einer Glaskolonne mit dem System Methanol-Wasser bei einem Kopfdruck von 950 mbar durchgeführt. Die Glaskolonne hatte einen Innendurchmesser von 50 mm und bestand aus 3 Schüssen, welche mit jeweils 5 Elementen ä 90 mm Höhe einer Edelstahlpackung vom Typ Rombopak® 6M der Fa. Kühni bestückt war. Diese Packung wurde mit Polyacrylsäure mit einem Molekulargewicht von 1100000 g/mol belegt. Die Belegung wurde mit einer 1 %igen wässrigen Polyacrylsäurelösung in der Art durchgeführt, dass die gesamte Kolonne mit dieser Lösung geflutet und nach einer Stunde Kontaktzeit wieder entleert wurde. Die Kolonne wurde anschließend mit Wasser gespült um Reste von Polymer aus der Packung zu entfernen. Die Destillationsversuche wurden bei unendlichem Rücklauf durchgeführt, d.h. es wurde im Sumpf der Kolonne ein Gemisch aus Wasser und Methanol vorgelegt und die mittels Verdampfer erzeugten Kolonnenbrüden im Kondensator kondensiert und vollständig zur obersten Packung der Kolonne zurückgeführt. Es wurden Proben aus dem Rücklauf, dem Sumpf und den Flüssigkeitsabläufen der 3 Schüsse genommen und analysiert.

Dabei wurde eine größere Methanolabreicherung im Wesentlichen im untersten Schuss und damit eine Verbesserung der Trennleistung der mit dem Polymer belegten Packung im Vergleich zu einer nicht belegten Packung gefunden. In der nachfolgenden Figur sind die Methanolkonzentrationen im Ablauf der Flüssigkeit eines Schusses über der Methanolkonzentration im Zulauf dieses Schusses (jeweils in Gew.-%) einmal ohne Oberflächenmodifizierung (offene Quadrate) und einmal mit Oberflächenmodifizierung (geschlossene Kreise) dargestellt. Es ist eine Reduzierung der Methanolablaufkonzentration um den Faktor 3-5 für Methanolzulaufkonzentrationen < 20 Gew.% zu erkennen.

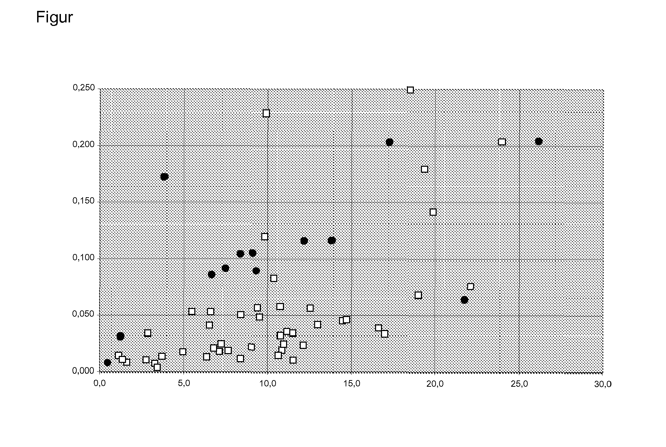

## Patentansprüche

1. Verfahren zur Herstellung einer mit einem Polymer belegten, metallischen Packung, wobei das für die Belegung der Packung mit dem Polymer eingesetzte Polymer in einem Lösungsmittel derart löslich ist, dass mindestens 0,01 g Polymer pro Liter Lösungsmittel gelöst werden, **dadurch gekennzeichnet, dass** man die Packung mit einer Lösung, welche das Polymer enthält, in Kontakt bringt.

2. Verfahren zur Herstellung einer mit einem Polymer belegten, metallischen Oberfläche eines Wärmeübertragers, wobei das für die Belegung der Oberfläche mit dem Polymer eingesetzte Polymer in einem Lösungsmittel derart löslich ist, dass mindestens 0,01 g Polymer pro Liter Lösungsmittel gelöst werden, **dadurch gekennzeichnet, dass** man die Oberfläche mit einer Lösung, welche das Polymer enthält, in Kontakt bringt.

3. Verfahren nach Anspruch 1 oder 2, **dadurch gekennzeichnet dass** man ein ionisches Polymer, welches mindestens eine funktionelle Gruppe pro Molekül aufweist, einsetzt.

4. Verfahren nach Anspruch 1 oder 2, **dadurch gekennzeichnet, dass** man Poly(meth)acrylsäure oder Copolymere aus (Meth)acrylsäure mit Vinylmonomeren, Copolymere aus Malein- oder Fumarsäure mit Vinylmonomeren, Polyvinylphosphonsäure oder Copolymere aus Vinylphosphonsäure mit Vinylmonomeren, Polyethylenimin, Polyvinylamin, Polyetheramin oder Polystyrolsulfonsäure oder Gemische aus den genannten Polymere einsetzt.

5. Verfahren nach Anspruch 1 oder 2, **dadurch gekennzeichnet, dass** man Polyacrylsäure als Polymer einsetzt.

6. Verfahren nach Ansprüchen 1 bis 5, **dadurch gekennzeichnet, dass** man ein wässriges Lösungsmittel einsetzt.

7. Verfahren nach Ansprüchen 1 bis 6, **dadurch gekennzeichnet, dass** die Lösung 0,1 bis 10 Gew.-% des Polymers enthält.

8. Verfahren nach Ansprüchen 1 oder 3 bis 7, **dadurch gekennzeichnet, dass** die Zeitdauer des Kontakts der Packung mit der das Polymer enthaltenden Lösung 0,1 Minuten bis 2 Stunden beträgt.

9. Verfahren nach Ansprüchen 1 oder 3 bis 8, **dadurch gekennzeichnet, dass** man die Dauer, mit der die Packung mit der das Polymer enthaltenen Lösung in Kontakt kommt so einstellt, dass die Packung mit einer Schichtdicke von 0,3 Nanometer bis 1 Mikrometer mit dem Polymer belegt wird.

10. Verfahren nach Ansprüchen 1 oder 3 bis 9, **dadurch gekennzeichnet, dass** man geordnete Packungen einsetzt.

11. Verfahren nach Ansprüchen 1 oder 3 bis 9, **dadurch gekennzeichnet, dass** man ungeordnete Packungen einsetzt.

12. Verwendung der nach Ansprüchen 1 oder 3 bis 11 hergestellten Packungen zum Wärme- und oder Stoffaustausch zwischen einer wässrigen Flüssigkeit und einem Gas in einer Kolonne.

13. Verwendung nach Ansprüchen 1 oder 3 bis 11 hergestellten Packungen bei der Phasentrennung einer flüssigen wässrigen und einer flüssigen organischen Phase.

14. Verfahren zur Abtrennung von organischen Stoffen aus wässrigen Lösungen durch Abtrennung in einer Kolonne welche Packungen enthält, **dadurch gekennzeichnet, dass** man in der Kolonne Packungen einsetzt, welche gemäß Ansprüchen 1 oder 3 bis 11 hergestellt wurden.

15. Metallische Packung hergestellt nach einem Verfahren gemäß Ansprüchen 1 oder 3 bis 11.

16. Metallische Packung nach Anspruch 15, wobei als Polymer Poly(meth)acrylsäure oder Copolymere aus (Meth)acrylsäure mit Vinylmonomeren, Copolymere aus Malein- oder Fumarsäure mit Vinylmonomeren, Polyvinylphosphonsäure oder Copolymere aus Vinylphosphonsäure mit Vinylmonomeren, Polyethylenimin, Polyvinylamin, Polyetheramin oder Polystyrolsulfonsäure oder Gemische aus den genannten Polymere eingesetzt wird.

17. Metallische Packung nach Anspruch 15, wobei als Polymer Polyacrylsäure eingesetzt wird.
